# EUROPÄISCHE PATENTSCHRIFT

(11) **EP 2 268 731 B1**
(45) Veröffentlichungstag und Bekanntmachung des Hinweises auf die Patenterteilung: **12.10.2011**
(21) Anmeldenummer: 09731662.4
(22) Anmeldetag: 26.02.2009
(51) Int. Cl.: C08L 33/08, C08L 33/10, C08K 5/527, C09K 21/14, C08L 33/12

(54) **FLAMMFESTE PMMA-FORMMASSE**
FLAMEPROOF PMMA MOLDING COMPOUND
MASSE À MOULER DE PMMA ININFLAMMABLE

(30) Priorität: 17.04.2008 DE 102008001231
(43) Veröffentlichungstag der Anmeldung: 05.01.2011
(73) Patentinhaber: Evonik Röhm GmbH, 64293 Darmstadt (DE)
(72) Erfinder: GOLDACKER, Thorsten, 64380 Rossdorf (DE); KORALEWSKI, Klaus, 64560 Riedstadt (DE); WICKER, Michael, 64342 Seeheim-Jugenheim (DE)
(86) Internationale Anmeldenummer: PCT/EP2009/052238
(87) Internationale Veröffentlichungsnummer: WO 2009/127463

(56) Entgegenhaltungen:
- US-A- 3 890 409
- US-A- 4 458 045

## Beschreibung

Die Erfindung betrifft eine flammfeste PMMA-Formmasse, daraus hergestellte Formkörper und deren Verwendung.

Formmassen auf der Basis von Polymethylmethacrylat (PMMA) werden für verschiedenste Anwendungen eingesetzt. Hierzu werden die Massen üblicherweise zu Formteilen extrudiert oder spritzgegossen. Diese Formkörper zeichnen sich durch die typischen PMMA-Eigenschaften, wie Farblosigkeit und hohe Transparenz, Witterungsbeständigkeit, Wärmeformbeständigkeit, hervorragende mechanische Kennwerte, wie Zugmodul und gute Spannungsrissbeständigkeit aus.

Das Einsatzgebiet von extrudierten oder co-extrudierten PMMA-Formkörpern ist sehr vielseitig: So werden extrudierte oder co-extrudierte Platten sowohl für den Außenbereich, insbesondere für Automobilanbauteile, Bauelemente, Sportartikeloberflächen und Leuchtenabdeckungen, als auch im Innenbereich, insbesondere in der Möbelindustrie, für Leuchtenabdeckungen und Innenausstattungen von Automobilen, eingesetzt.

Bestimmte Anwendungen erfordern das Bestehen entsprechender Flammfestigkeitsprüfungen. So müssen zum Beispiel Gehäuse und Abdeckungen von Leuchten, insbesondere von Fluchtwegbeleuchtungen, eine Glühdrahtentflammbarkeitszahl von mindestens 850°C aufweisen. PMMA besitzt eine für Kunststoffe normale Entflammbarkeit; die Entflammbarkeitszahl im Glühdrahttest beträgt 650°C und ist somit für die vorgenannten Anforderungen verbesserungsbedürftig. Um die Flammfestigkeit zu erhöhen, können verschiedene Maßnahmen ergriffen werden, insbesondere gibt es eine Reihe von Additiven die flammhemmend wirken, ohne die übrigen Eigenschaften wie Farblosigkeit und Transparenz oder zersetzungsfreie Verarbeitung zu beeinträchtigen.

Bereits in den frühen 80er Jahren wurde von der Firma Sandoz ein Flammschutzmittel entwickelt, das bei einigen PMMA-Formmassen eine gewisse flammhemmende Wirkung zeigt (US-A-4458045). Es handelt sich dabei um 2,2'-[[2,2-Bis(chlormethyl)-propan-1,3-diyl]bis(oxy)]bis[5,5-dimethyl-1,3,2-dioxaphosphorinan]-2,2'-dioxid, welches im Handel früher unter dem Namen Sandoflam^{®} 5085 und jetzt unter dem Namen Exolit^{®} 5085 (Fa. Clariant) erhältlich ist. Bei anderen PMMA-Formmassen, insbesondere hochmolekularen PMMA-Formmassen wie PLEXIGLAS^{®} 7H, wird mit diesem Flammschutzmittel aber keine ausreichende Flammfestigkeit erzielt.

In der WO 03/037975 wird unter anderem Exolit 5085 zusammen mit Tris(2-Chlorisopropyl)-phosphat als flammhemmendes Additiv für PMMA eingesetzt. Nachteilig an dem dabei verwendeten halogenierten Alkylphosphat ist die niedrige Zersetzungstemperatur, die unterhalb der für PMMA-Formmassen üblichen Verarbeitungstemperatur von ca. 250°C liegt. Daher wird in der WO 03/037975 die thermoplastische Verarbeitung der additivierten PMMA-Formmasse nur bis zu einer Temperatur von 235°C beschrieben. Eine derart niedrige Verarbeitungstemperatur hat aber verschiedene Nachteile wie z.B. längere Zykluszeiten beim Spritzgießen und verringerte Durchsätze bei der Extrusion.

Darüber hinaus wird in mehreren Schriften (EP-A-1013713, WO 00/37557) ein Blend aus PMMA und PVC als flammfeste Formmasse beschrieben. Hier wirkt PVC wie ein halogenhaltiges Flammschutzmittel. Allerdings liegt die Zersetzungstemperatur von PVC ebenfalls unter der üblichen Verarbeitungstemperatur von PMMA-Formmassen, so dass sich wiederum Nachteile bei der Verarbeitung ergeben. Außerdem wirkt sich die Anwesenheit von PVC nachteilig auf die Witterungsbeständigkeit des Blends aus.

Im Hinblick auf die vorgenannten Nachteile besteht nun die Aufgabe darin, eine Formmasse auf Basis von, im wesentlichen hochmolekularen, (Meth)acrylat(co)polymeren bereitzustellen, die den Glühdrahttest nach IEC 60695-2-10:2000 mit einer Glühdrahtentflammbarkeitszahl von mindestens 850°C besteht und trotzdem temperaturstabil und witterungsbeständig ist.

Die Aufgabe wird gelöst durch den Zusatz eines weiteren niedermolekularen (Meth)acrylat(co)polymers sowie einer Organophosphorverbindung wie nachfolgend definiert.

Gegenstand der Erfindung ist eine Formmasse, enthaltend
A) 50 bis 98,9 Gew.-% mindestens eines (Meth)acrylat(co)polymers mit einer Lösungsviskositätszahl (VZ) von 60 bis 100 ml/g,
B) 0,1 bis 49 Gew.-% mindestens eines (Meth)acrylat(co)polymers mit einer Lösungsviskositätszahl (VZ) von 10 bis 50 ml/g, und
C) 1 bis 30 Gew.-% mindestens einer Organophosphorverbindung der allgemeinen Formel I 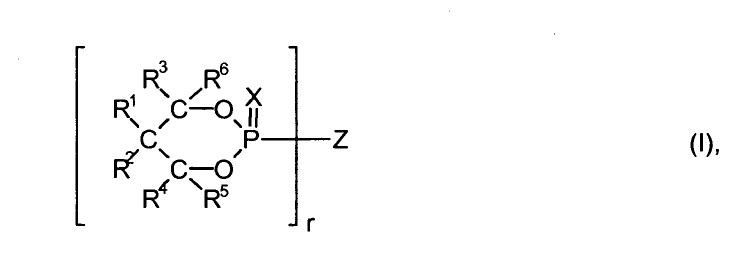
worin
R¹ und R² unabhängig voneinander C₁-C₄-Alkyl oder Phenyl sind,
R³ und R⁴ unabhängig voneinander Wasserstoff oder C₁-C₄-Alkyl sind,
R⁵ und R⁶ unabhängig voneinander Wasserstoff oder Methyl sind,
X Sauerstoff ist,
r = 2, 3 oder 4 ist,
-Z-
für r = 2 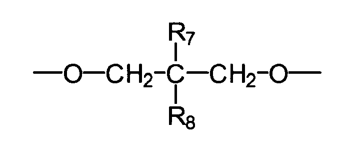 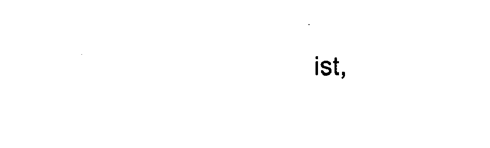 für r =3 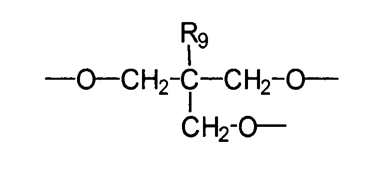 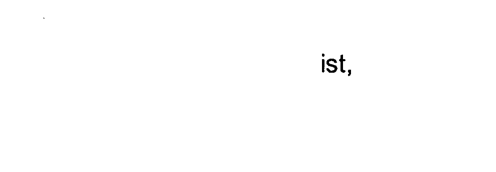 für r =4 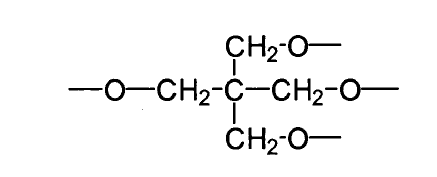 ist,
worin
R₇, R₈ und R₉ unabhängig voneinander halogeniertes C₁-C₄-Alkyl bedeuten, und wobei sich die Anteile von A), B) und C) an der erfindungsgemäßen Formmasse zu 100,0 Gew.-% addieren und die VZ in Chloroform bei 25°C (ISO 1628-6 : 1990 (E)) gemessen wurde.

Der Ausdruck (Meth)acrylat umfasst Methacrylate und Acrylate sowie Mischungen aus beiden. Diese Monomere sind weithin bekannt.

Das (Meth)acrylat(co)polymer A) ist vorzugsweise ein Homopolymer oder Copolymer aus mindestens 80,0 Gew.-% Methylmethacrylat und gegebenenfalls bis zu 20,0 Gew.-% weiteren mit Methylmethacrylat copolymerisierbaren Monomeren. Das (Meth)acrylat(co)polymer A) besteht vorzugsweise zu 90,0 bis 99,5 Gew.-% , besonders bevorzugt zu 93,0 bis 98,0 Gew.-%, aus Methylmethacrylat-Einheiten und aus weiteren Comonomer-Einheiten in einer Gesamtmenge von vorzugsweise 0,5 bis 10,0 Gew.-%, besonders bevorzugt von_2,0 bis 7,0 Gew.-%. Geeignete radikalisch polymerisierbare Comonomere sind beispielsweise andere Acrylate, Methacrylate und/oder Vinylaromaten. Bevorzugt werden als Comonomere C₁-C₄-Alkyl(meth)acrylate eingesetzt, insbesondere Methylacrylat, Ethylacrylat und/oder Butylacrylat, wobei Methylacrylat besonders bevorzugt ist.

Ganz besonders bevorzugt wird als hochmolekulares (Meth)acrylat(co)polymer A) ein Copolymer aus 96 Gew.% Methylmethacrylat und 4 Gew.% Methylacrylat eingesetzt.

Die hochmolekularen (Meth)acrylat(co)polymeren A) weisen eine Lösungsviskositätszahl (VZ) in Chloroform bei 25 °C (ISO 1628-6 : 1990 (E)) von 60 bis 100 ml/g, bevorzugt von 65 bis 90 ml/g, vorzugsweise von 67 bis 80 ml/g, auf. Ganz besonders bevorzugt ist ein Copolymer aus 96 Gew.-% Methylmethacrylat und 4 Gew.-% Methylacrylat mit einer Lösungsviskositätszahl von 71 cm³/g. Ein solches Copolymer ist im Handel als PLEXIGLAS^{®} 7H von der Firma Evonik Röhm GmbH erhältlich.

Das (Meth)acrylat(co)polymer B) ist vorzugsweise ein Homopolymer oder Copolymer aus mindestens 50 Gew.-% Methylmethacrylat und gegebenenfalls bis zu 50 Gew.-% weiteren mit Methylmethacrylat copolymerisierbaren Monomeren. Das (Meth)acrylat(co)polymer B) besteht vorzugsweise aus mindestens 80 Gew.-%, besonders bevorzugt aus mindestens 95 Gew.-%, Methylmethacrylat-Einheiten und aus weiteren Comonomer-Einheiten in einer Gesamtmenge von vorzugsweise bis zu 20 Gew.-%, besonders bevorzugt von bis zu 5 Gew.-%. Geeignete radikalisch_polymerisierbare Comonomere sind beispielsweise andere Acrylate, Methacrylate und/oder Vinylaromaten. Bevorzugt werden als Comonomere C₁-C₄-Alkyl(meth)acrylate eingesetzt, insbesondere Methylacrylat, Ethylacrylat und/oder Butylacrylat, wobei Methylacrylat besonders bevorzugt ist.

Ganz besonders bevorzugt wird als niedermolekulares (Meth)acrylat(co)polymer B) ein Copolymer aus 99 Gew.-% Methylmethacrylat und 1 Gew.-% Methylacrylat eingesetzt.

Das niedermolekulare (Meth)acrylat(co)polymer B) ist charakterisiert durch eine Lösungsviskosität in Chloroform bei 25 °C (DIN ISO 1628-6 : 1990 (E)) von 10 bis 50 ml/g, bevorzugt 20 bis 50 ml/g, insbesondere 25 bis 45 ml/g. Gemäß einer bevorzugten Ausführungsform ist B) ein Copolymer aus 99% Methylmethacrylat und 1 % Methylacrylat mit einer Lösungsviskositätszahl von 40 ml/g.

Die Komponenten A) und B) können in bekannter Weise durch radikalische Polymerisation erhalten werden.

Als Komponente C) werden bevorzugt Organophosphorverbindungen der Formel I eingesetzt, worin
R¹ und R² C₁-C₄-Alkyl sind,
R³ und R⁴ Wasserstoff sind,
R⁵ und R⁶ Wasserstofif sind,
X Sauerstoff ist,
r = 2 ist,
Z 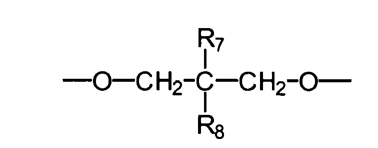 ist,
und
R₇ und R₈ unabhängig voneinander -CH₂-X mit X = Cl oder Br sind.

Besonders bevorzugt werden Organophosphorverbindungen der Formel la 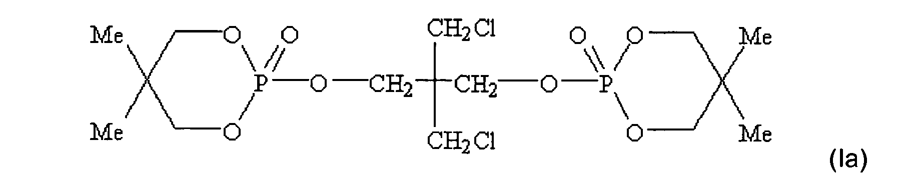 verwendet, welche unter dem Namen Exolit® 5085 im Handel erhältlich sind. Die Herstellung von den Organophosphorverbindungen der Formel I wird in der US-A-4458045 beschrieben.

Der Anteil von A) an der erfindungsgemäßen Formmasse beträgt bevorzugt 70,0 bis 94,5 Gew.-%, besonders bevorzugt 75 bis 89 Gew.-%.

Der Anteil von B) an der erfindungsgemäßen Formmasse beträgt bevorzugt 0,5 bis 25 Gew.-%, besonders bevorzugt 1 bis 10 Gew.-%.

Der Anteil von C) an der erfindungsgemäßen Formmasse beträgt bevorzugt 5 bis 25 Gew.-%, besonders bevorzugt 10 bis 20 Gew.-%.

Die Anteile von A), B) und C) an der erfindungsgemäßen Formmasse addieren sich zu 100,0 Gew.-%, wobei die Formmasse zusätzlich noch übliche Zusatz-, Hilfs- und/oder Füllstoffe in üblichen Mengen enthalten kann.

Übliche Zusatz-, Hilfs- und/oder Füllstoffe sind z. B. Thermostabilisatoren, UV-Stabilisatoren, UV-Absorber, Antioxidantien, Farbmittel (lösliche und/oder unlösliche wie Pigmente) und/oder Gleit- bzw. Formtrennmittel enthalten. Die vorgenannten Additive können in der erfindungsgemäßen Formmasse in Mengen von 0,0001 Gew.-% bis 1,5 Gew.-%, vor allem in Mengen von 0,001 Gew.-% bis 1,0 Gew.-%, insbesondere in Mengen von 0,01 Gew.-% bis 0,5 Gew.-%, enthalten sein, wobei die Gesamtmenge der Additive maximal 5 Gew.-% betragen darf.

Die erfindungsgemäße Formmasse kann in Abhängigkeit von den optional verwendeten Zusatzstoffen transparent oder nicht transparent sein.

Die erfindungsgemäße Formmasse kann durch trockenes Abmischen der Komponenten A), B) und C), die als Pulver, Körner oder bevorzugt Granulate vorliegen können, hergestellt werden. Weiterhin kann sie auch bevorzugt durch Schmelzen und Vermengen der Komponenten A), B) und C) im Schmelzezustand oder durch Schmelzen trockener Vormischungen von Einzelkomponenten A) und B) und Zugabe der Komponente C) hergestellt werden. Dies kann z. B. in Ein- oder Zweischneckenextrudern erfolgen. Das erhaltene Extrudat kann anschließend granuliert werden. Die vorgenannten üblichen Zusatz, Hilfs- und/oder Füllstoffe können direkt zugemischt oder später von Endverbraucher nach Bedarf zugegeben werden.

Die erfindungsgemäße Formmasse eignet sich als Ausgangsstoff für die Herstellung von Formkörpern. Die Umformung der Formmasse kann auf an sich bekannte Weise, z. B. durch Verarbeitung über den elastoviskosen Zustand, d. h. durch Kneten, Walzen, Kalandrieren, Extrudieren oder Spritzgießen, erfolgen, wobei das Extrudieren und das Spritzgießen bevorzugt werden.

Das Spritzgießen der Formmasse kann auf an sich bekannte Weise bei Temperaturen im Bereich von 220°C - 310°C (Massetemperatur), vorzugsweise 250 - 280°C und einer Werkzeugtemperatur von vorzugsweise 60°C bis 90°C erfolgen.

Die Extrusion wird vorzugsweise bei einer Temperatur von 220°C bis 260°C durchgeführt.

Die auf diese Weise erhältlichen Formkörper zeichnen sich insbesondere durch die folgenden Eigenschaften aus:

Die Glühdrahtentflammbarkeitszahl, ermittelt durch den Glühdrahttest nach IEC 695-2-1, beträgt mindestens 850°C, vorzugsweise 960°C.

Die Transmission, ermittelt nach ISO 13468-2 : 1999 (E), ist vorzugsweise im Bereich von 40 % bis 93 %, besonders bevorzugt im Bereich von 55 % bis 93 %, insbesondere im Bereich von 55 % bis 85 %. Der Halbwertswinkel nach DIN 5036 liegt vorzugsweise im Bereich von 1 ° bis 55°, besonders bevorzugt im Bereich von 2° bis 40°, insbesondere im Bereich von 8° bis 37°.

Die erfindungsgemäßen Formkörper können als Bauteile in der Elektroindustrie, beispielsweise als Leuchtenabdeckungen, eingesetzt werden. Sie finden insbesondere Anwendung für Gehäuse oder Abdeckungen von Fluchtwegbeleuchtungen, da diese eine Glühdrahtentflammbarkeitszahl des Gehäusematerials von mindestens 850°C zwingend erfordern.

### BEISPIELE

Im Folgenden wird die Erfindung durch Beispiele näher erläutert, ohne dass hierdurch eine Beschränkung des Erfindungsgedankens erfolgen soll.

Die Standardformmasse PLEXIGLAS^{®} 7H der Fa. Evonik Röhm GmbH (Lösungsviskositätszahl VZ = 71 cm³/g) wurde mit einem Copolymer aus 99 Gew.-% MMA und 1 Gew.-% Methylacrylat mit einer Lösungsviskositätszahl VZ = 40 cm³/g und zusätzlich 15% Exolit® 5085 (Fa. Clariant) gemischt. Dazu wurden die beiden Polymergranulate und das Flammschutzmittel jeweils zweimal in einem 15 mm Stork Einschneckenextruder bei 230°C extrudiert und granuliert. Die glasklaren und farblosen Compounds wurden zu rechteckigen Plättchen 65x40x3 mm spritzgegossen und dem Glühdrahttest nach IEC 695-2-1 unterzogen.

| Beispiel Nr. | Polymerverhältnis A):B) Plexiglas® 7H: Copo 99-1 | Exolit® 5085/ Gew.-% | GWFI*/°C |
|---|---|---|---|
| Vergleich | 100:0 | 15 | 650 |
| 1 | 98,75:1,25 | 15 | 960 |
| 2 | 97,50:2,50 | 15 | 960 |
| 3 | 95,00:5,00 | 15 | 960 |

| | | | |
|---|---|---|---|
| *GWFI= GlowWire Flammability Index= Glühdrahtentflammbarkeitszahl | | | |

Die in der vorstehenden Tabelle aufgeführten Meßdaten zeigen, dass bereits geringe Anteile der Komponente B) in der Formmasse ausreichen, um die Glühdrahtentflammbarkeitszahl um 300°C gegenüber einer Formmasse ohne die Komponente B) zu erhöhen.

## Patentansprüche

1. Formmasse, enthaltend
A) 50 bis 98,9 Gew.-% mindestens eines (Meth)acrylat(co)polymers mit einer Lösungsviskositätszahl (VZ) von 60 bis 100 ml/g,
B) 0,1 bis 49 Gew.-% mindestens eines (Meth)acrylat(co)polymers mit einer Lösungsviskositätszahl (VZ) von 10 bis 50 ml/g, und
C) 1 bis 30 Gew.-% mindestens einer Organophosphorverbindung der allgemeinen Formel I 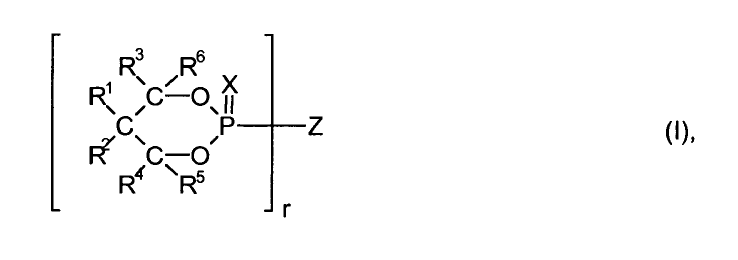 worin
R¹ und R² unabhängig voneinander C₁-C₄-Alkyl oder Phenyl sind, R³ und R⁴ unabhängig voneinander Wasserstoff oder C₁-C₄-Alkyl sind,
R⁵ und R⁶ unabhängig voneinander Wasserstoff oder Methyl sind, X Sauerstoff ist,
r = 2, 3 oder 4 ist,
-Z-
für r = 2 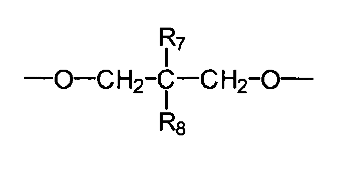 ist,
für r =3 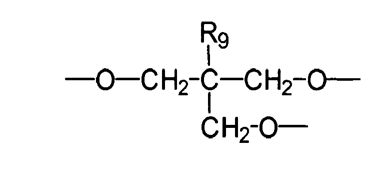 ist,
für r =4 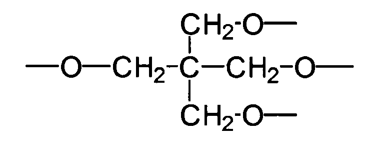 ist,
worin
R₇, R₈ und R₉ unabhängig voneinander halogeniertes C₁-C₄-Alkyl bedeuten,
und wobei sich die Anteile von A), B) und C) an der erfindungsgemäßen Formmasse zu 100,0 Gew.-% addieren und die VZ in Chloroform bei 25°C (ISO 1628-6 : 1990 (E)) gemessen wurde.

2. Formmasse nach Anspruch 1, **dadurch gekennzeichnet, dass** der Anteil der Komponente A) 70 bis 94,5 Gew.-%, der Anteil der Komponente B) 0,5 bis 25 Gew.-% und der Anteil der Komponente C) 5 bis 25 Gew.-% beträgt.

3. Formmasse nach Anspruch 1 oder 2, **dadurch gekennzeichnet, daß** Komponente A) ein (Meth)acrylat(co)polymer mit einer VZ von 65 bis 90 ml/g und Komponente B) ein (Meth)acrylat(co)polymer mit einer VZ von 20 bis 50 ml/g ist.

4. Formmasse nach Anspruch 3, **dadurch gekennzeichnet, daß** Komponente A) eine VZ von 67 bis 80 ml/g und Komponente B) eine VZ von 25 bis 45 ml/g aufweist.

5. Formmasse nach einem oder mehreren der Ansprüche 1-4, **dadurch gekennzeichnet, daß** die Komponente A) ein Homopolymer oder Copolymer aus mindestens 80,0 Gew.-% Methylmethacrylat und gegebenenfalls bis zu 20,0 Gew.-% mindestens eines weiteren mit Methylmethacrylat copolymerisierbaren Monomeren ist.

6. Formmasse nach Anspruch 5, **dadurch gekennzeichnet, daß** A) ein Copolymer aus 90,0 bis 99,5 Gew. -% Methylmethacrylat und 0,5 bis 10,0 Gew.-% mindestens eines C₁-C₄-Alkyl(meth)acrylats ist.

7. Formmasse nach einem oder mehreren der Ansprüche 1-4, **dadurch gekennzeichnet, daß** die Komponente B) ein Homopolymer oder Copolymer aus mindestens 50,0 Gew.-% Methylmethacrylat und gegebenenfalls bis zu 50,0 Gew.-% mindestens eines weiteren mit Methylmethacrylat copolymerisierbaren Monomeren ist.

8. Formmasse nach Anspruch 7, **dadurch gekennzeichnet, daß** die Komponente B) ein Copolymer aus mindestens 80,0 Gew.-% Methylmethacrylat und bis zu 20,0 Gew.-% mindestens eines C₁-C₄-Alkyl(meth)acrylats ist.

9. Formmasse nach einem oder mehreren der Ansprüche 1 bis 8,
**dadurch gekennzeichnet, dass** C) eine Organophosphorverbindung der Formel I ist, worin
R¹ und R² C₁-C₄-Alkyl sind,
R³ und R⁴ Wasserstoff sind,
R⁵ und R⁶ Wasserstoff sind,
X Sauerstoff ist,
r = 2 ist,
Z 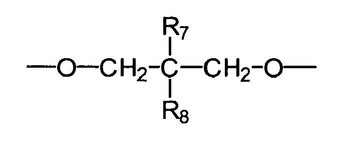 ist,
und
R₇ und R₈ unabhängig voneinander -CH₂-X mit X = Cl oder Br sind.

10. Formmasse nach Anspruch 9, **dadurch gekennzeichnet, daß** C) eine Organophosphorverbindung der Formel la 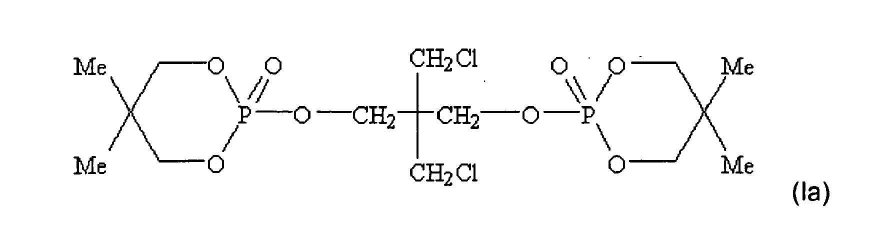 ist.

11. Formmasse nach einem oder mehreren der Ansprüche 1 bis 10,
**dadurch gekennzeichnet, dass** sie eine Glühdrahtentflammbarkeitszahl (IEC 695-2-1) von mindestens 850°C aufweist.

12. Formmasse nach einem oder mehreren der Ansprüche 1 bis 11, enthaltend übliche Zusatz-, Hilfs- und/oder Füllstoffe in üblichen Mengen.

13. Verfahren zur Herstellung von Formkörpern, **dadurch gekennzeichnet,**
**dass** man eine Formmasse nach einem oder mehreren der Ansprüche 1 bis 12 extrudiert oder spritzgießt.

14. Formkörper, herstellbar nach einem Verfahren gemäß Anspruch 13.

15. Verwendung der Formkörper gemäß Anspruch 14 als Bauteil in der Elektroindustrie.

## Claims

1. Moulding material containing
A) 50 to 98.9% by weight of at least one (meth)acrylate(co)polymer having a solution viscosity number (VN) of 60 to 100 ml/g,
B) 0.1 to 49% by weight of at least one (meth)acrylate(co)polymer having a solution viscosity number (VN) of 10 to 50 ml/g and
C) 1 to 30% by weight of at least one organophosphorus compound of the general formula I 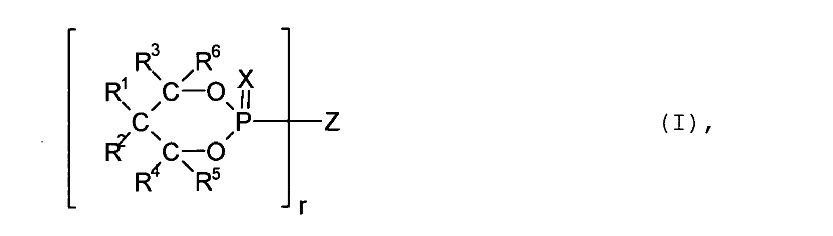 in which
R¹ and R², independently of one another, are C₁-C₄-alkyl or phenyl,
R³ and R⁴, independently of one another, are hydrogen or
C₁-C₄-alkyl,
R⁵ and R⁶, independently of one another, are hydrogen or methyl,
X is oxygen,
r is 2, 3 or 4,
-Z- is 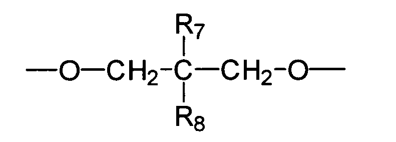 for r = 2, is 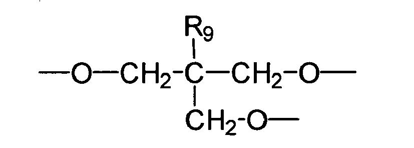 for r= 3, is 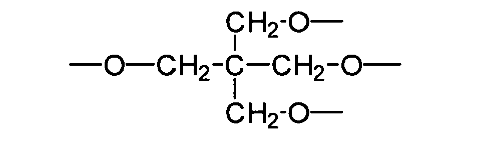 for r = 4,
in which
R₇, R₈ and R₉, independently of one another, denote halogenated C₁-C₄-alkyl,
the proportions of A), B) and C) in the moulding material according to the invention summing to 100.0% by weight and the VN being measured in chloroform at 25°C (ISO 1628-6:1990 (E)).

2. Moulding material according to Claim 1, **characterized in that** the proportion of component A) is 70 to 94.5% by weight, the proportion of the component B) is 0.5 to 25% by weight and the proportion of the component C) is 5 to 25% by weight.

3. Moulding material according to Claim 1 or 2, **characterized in that** the component A) is a (meth)acrylate(co)polymer having a VN of 65 to 90 ml/g and component B) is a (meth)acrylate(co)polymer having a VN of 20 to 50 ml/g.

4. Moulding material according to Claim 3, **characterized in that** component A) has a VN of 67 to 80 ml/g and component B) a VN of 25 to 45 ml/g.

5. Moulding material according to one or more of Claims 1-4, **characterized in that** the component A) is a homopolymer or copolymer of at least 80.0% by weight of methyl methacrylate and optionally up to 20.0% by weight of at least one further monomer copolymerizable with methyl methacrylate.

6. Moulding material according to Claim 5, **characterized in that** A) is a copolymer of 90.0 to 99.5% by weight of methyl methacrylate and 0.5 to 10.0% by weight of at least one C₁-C₄-alkyl (meth)acrylate.

7. Moulding material according to one or more of Claims 1-4, **characterized in that** the component B) is a homopolymer or copolymer of at least 50.0% by weight of methyl methacrylate and optionally up to 50.0% by weight of at least one further monomer copolymerizable with methyl methacrylate.

8. Moulding material according to Claim 7, **characterized in that** the component B) is a copolymer of at least 80.0% by weight of methyl methacrylate and up to 20.0% by weight of at least one C₁-C₄-alkyl (meth)acrylate.

9. Moulding material according to one or more of Claims 1 to 8, **characterized in that** C) is an organophosphorus compound of the formula I, in which
R¹ and R² are C₁-C₄-alkyl,
R³ and R⁴ are hydrogen,
R⁵ and R⁶ are hydrogen,
X is oxygen,
r is 2,
Z is 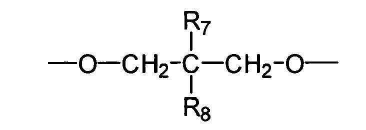 and
R₇ and R₈, independently of one another, are -CH₂-X where X = Cl or Br.

10. Moulding material according to Claim 9, **characterized in that** C) is an organophosphorus compound of the formula Ia

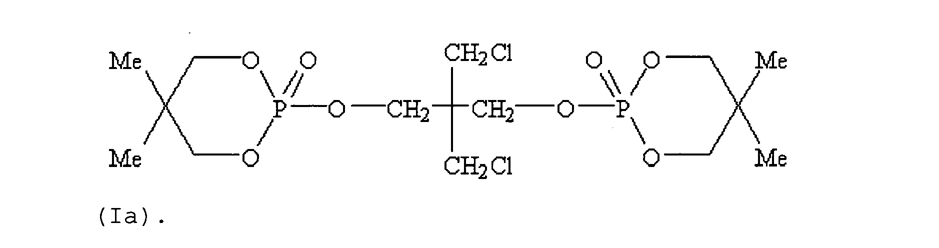

11. Moulding material according to one or more of Claims 1 to 10, **characterized in that** it has a glow wire flammability index (IEC 695-2-1) of at least 850°C.

12. Moulding material according to one or more of Claims 1 to 11, containing customary additives, auxiliaries and/or fillers in customary amounts.

13. Process for the production of mouldings, **characterized in that** a moulding material according to one or more of Claims 1 to 12 is extruded or injection moulded.

14. Mouldings which can be prepared by a process according to Claim 13.

15. Use of the mouldings according to Claim 14 as a component in the electrical industry.

## Revendications

1. Masse de moulage, contenant
A) 50 à 98,9% en poids d'au moins un (co)polymère de (méth)acrylate présentant un indice de viscosité en solution (IV) de 60 à 100 ml/g,
B) 0,1 à 49% en poids d'au moins un (co)polymère de (méth)acrylate présentant un indice de viscosité en solution (IV) de 10 à 50 ml/g, et
C) 1 à 30% en poids d'au moins un composé organophosphoré de formule générale I, 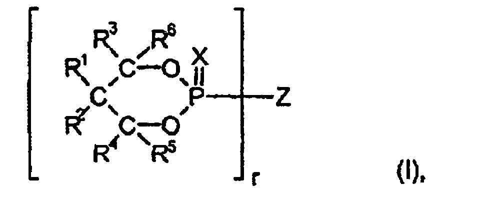 où
R¹ et R² représentent, indépendamment l'un de l'autre, C₁-C₄-alkyle ou phényle,
R³ et R⁴ représentent, indépendamment l'un de l'autre, hydrogène ou C₁-C₄-alkyle,
R⁵ et R⁶ représentent, indépendamment l'un de l'autre hydrogène ou méthyle,
X représente oxygène,
r = 2, 3 ou 4,
-Z-
pour r = 2 représente 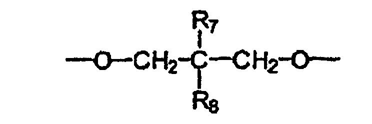 pour r = 3 représente 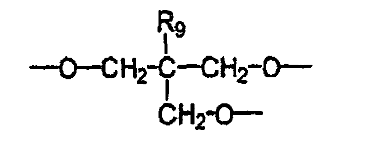 pour r = 4 représente 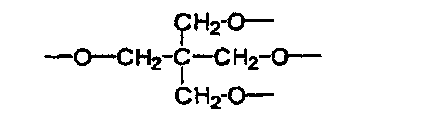 où
R⁷, R⁸ et R⁹ signifient, indépendamment l'un de l'autre, C₁-C₄-alkyle halogéné,
et où la somme des proportions de A), B) et C) dans la masse de moulage selon l'invention vaut 100% en poids et l'IV est mesuré dans du chloroforme à 25°C (ISO 1628-6:1990 (E)).

2. Masse de moulage selon la revendication 1, caractérisée
la proportion du composant A) est de 70 à 94,5% en poids, la proportion du composant B) est de 0,5 à 25% en poids et la proportion du composant C) est de 5 à 25% en poids.

3. Masse de moulage selon la revendication 1 ou 2, **caractérisée en ce que** le composant A) est un (co)polymère de (méth)acrylate présentant un IV de 65 à 90 ml/g et le composant B) est un (co)polymère de (méth)acrylate présentant un IV de 20 à 50 ml/g.

4. Masse de moulage selon la revendication 3, **caractérisée en ce que** le composant A) présente un IV de 67 à 80 ml/g et le composant B) présente un IV de 25 à 45 ml/g.

5. Masse de moulage selon l'une ou plusieurs des revendications 1 à 4, **caractérisée en ce que** le composant A) est un homopolymère ou un copolymère d'au moins 80,0% en poids de méthacrylate de méthyle et le cas échéant de jusqu'à 20,0% en poids d'au moins un autre monomère copolymérisable avec le méthacrylate de méthyle.

6. Masse de moulage selon la revendication 5, **caractérisée en ce que** A) est un copolymère de 90,0 à 99,5% en poids de méthacrylate de méthyle et de 0,5 à 10,0% en poids d'au moins un (méth)acrylate de C₁-C₄-alkyle.

7. Masse de moulage selon l'une ou plusieurs des revendications 1 à 4, **caractérisée en ce que** le composant B) est un homopolymère ou un copolymère d'au moins 50,0% en poids de méthacrylate de méthyle et le cas échéant de jusqu'à 50,0% en poids d'au moins un autre monomère copolymérisable avec le méthacrylate de méthyle.

8. Masse de moulage selon la revendication 7, **caractérisée en ce que** le composant B) est un copolymère d'au moins 80,0% en poids de méthacrylate de méthyle et de jusqu'à 20,0% en poids d'au moins un (méth)acrylate de C₁-C₄-alkyle.

9. Masse de moulage selon l'une ou plusieurs des revendications 1 à 8, **caractérisée en ce que** C) est un composé organophosphoré de formule I, où R¹ et R² représentent C₁-C₄-alkyle,
R³ et R⁴ représentent hydrogène,
R⁵ et R⁶ représentent hydrogène,
X représente oxygène,
r = 2,
Z représente 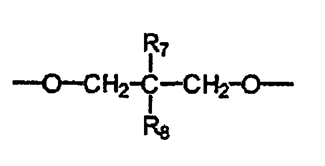 et
R₇ et R₈ représentent, indépendamment l'un de l'autre, -CH₂-X avec X = Cl ou Br.

10. Masse de moulage selon la revendication 9, **caractérisée en ce que** C) est un composé organophosphoré de formule la

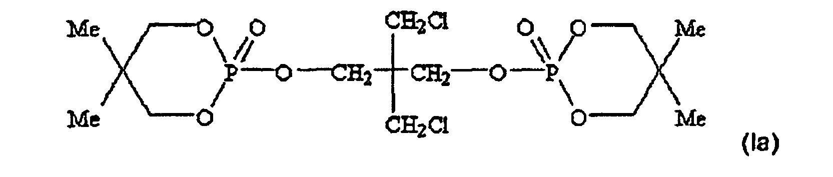

11. Masse de moulage selon l'une ou plusieurs des revendications 1 à 10, **caractérisée en ce qu'**elle présente un indice d'inflammabilité au fil incandescent (IEC 695-2-1) d'au moins 850°C.

12. Masse de moulage selon l'une ou plusieurs des revendications 1 à 11, contenant des additifs, adjuvants et/ou charges usuel(le)s aux quantités usuelles.

13. Procédé pour la fabrication de corps moulés, **caractérisé en ce qu'**on extrude ou moule par injection une masse de moulage selon l'une ou plusieurs des revendications 1 à 12.

14. Corps moulé, pouvant être fabriqué par un procédé selon la revendication 13.

15. Utilisation du corps moulé selon la revendication 14 comme pièce dans l'industrie électrique.
